# EUROPEAN PATENT SPECIFICATION

(11) **EP 4 017 689 B1**
(45) Date of publication and mention of the grant of the patent: **30.10.2024**
(21) Application number: 19794284.0
(22) Date of filing: 30.09.2019
(51) Int. Cl.: B25J 9/16, G06N 3/008, G06N 20/00

(54) **ROBOTICS CONTROL SYSTEM AND METHOD FOR TRAINING SAID ROBOTICS CONTROL SYSTEM**
ROBOTERSTEUERUNGSSYSTEM UND VERFAHREN ZUM TRAINIEREN DES ROBOTERSTEUERUNGSSYSTEMS
SYSTÈME DE COMMANDE ROBOTIQUE ET PROCÉDÉ D'ENTRAÎNEMENT DUDIT SYSTÈME DE COMMANDE ROBOTIQUE

(43) Date of publication of application: 29.06.2022
(73) Proprietor: Siemens Aktiengesellschaft, 80333 München (DE)
(72) Inventor: SOLOWJOW, Eugen, Berkeley, California 94709 (US); APARICIO OJEA, Juan L., Moraga, California 94556 (US); KUMAR, Avinash, 90403 Nuremberg (DE); LOSKYLL, Matthias, 92318 Neumarkt (DE)
(74) Representative: Horn Kleimann Waitzhofer Schmid-Dreyer Patent- und Rechtsanwälte PartG mbB
(86) International application number: PCT/US2019/053839
(87) International publication number: WO 2021/066801

(56) References cited:
- US-A1- 2019 255 703
- US-B1- 9 008 840
- MOOSA M AL-MAZEEDI: "Formulation of Orthogonal State Variables and Applications to Control Systems", AMERICAN CONTROL CONFERENCE, 1987, IEEE, PISCATAWAY, NJ, USA, 10 June 1987 (1987-06-10), pages 1919 - 1924, XP031428303
- ANDREW Y NG ET AL: "Policy invariance under reward transformations: Theory and application to reward shaping", PROCEEDINGS OF THE SIXTEENTH INTERNATIONAL CONFERENCE ON MACHINE LEARNING, 1 June 1999 (1999-06-01), pages 1 - 10, XP055706517, Retrieved from the Internet <URL:https://people.eecs.berkeley.edu/~russell/papers/icml99-shaping.pdf> [retrieved on 20200618]
- T. SILVERK. ALLENJ. TENENBAUML. KAELBLING: "Residual Policy Learning", ARXIV: 1812.06298V2 [CS.RO, 3 January 2019 (2019-01-03), XP081018652

## Description

### BACKGROUND

### 1. FIELD

Disclosed embodiments relate generally to the field of industrial automation and control, and, more particularly, to control techniques involving an adaptively weighted combination of reinforcement learning and conventional feedback control techniques, and, even, more particularly, to robotics control system and method suitable for industrial reinforcement learning.

### 2. Description of the Related Art

Conventional feedback control techniques (which may be referred throughout this disclosure as "conventional control") can solve various types of control problems --such as without limitation, robotics control, autonomous industrial automation, etc.-- This conventional control is generally accomplished by very efficiently capturing an underlying physical structure with explicit models. In one example application, this could involve an explicit definition of the body equations of motion that may be involved for controlling a trajectory of a given robot. It will be appreciated, however, that many control problems in modern manufacturing can involve various physical interactions with objects, such as may involve, without limitation, contacts, impacts, and/or friction with one or more of the objects. These physical interactions tend to be more difficult to capture with a first-order physical model. Hence, applying conventional control techniques to these situations often can result in brittle and inaccurate controllers, which, for example, have to be manually tuned for deployment. This adds to costs and can increase the time involved for robot deployment.

Reinforcement learning (RL) techniques have been demonstrated to be capable of learning continuous robot controllers involving interactions with the physical environment. However, a disadvantage commonly encountered in RL techniques, particularly those involving deep RL techniques with very expressive function approximators, may be the burdensome and time-consuming exploratory behavior, and the substantial sample inefficiency that may be involved, such as is generally the case when learning a control policy from scratch.

For an example of control techniques that may decompose the overall control strategy into a control part that is solved by conventional control techniques, and a residual control part, which is solved with RL, see the following technical papers, respectively titled: "Residual Reinforcement Learning for Robot Control" by T. Johannink; S. Bahl; A. Nair; J. Luo; A. Kumar; M. Loskyll; J. Aparicio Ojea; E. Solowjow; and S. Levine, published in arXiv:1812.03201v2 [cs.RO], 18 Dec 2018; and "Residual Policy Learning" by T. Silver; K. Allen; J. Tenenbaum; and L. Kaelbling, published in arXiv: 1812.06298v2 [cs.RO], 3 Jan 2019.

It will be appreciated that the approach described in the above-cited papers may be somewhat limited for broad and cost-effective industrial applicability since, for example, reinforcement learning from scratch tends to remain substantially data-inefficient and/or intractable.

The document US 9,008,840 B1 discloses methods for reinforcement-guided supervised learning relating to robotics control.

The document US 2019/0255703 A1 discloses methods for adaptive prediction relating to robotics control.

The document "Formulation of Orthogonal State Variables and Applications to Control Systems" by M. Al-Mazeedi, June 10, 1987, discloses methods for formulation of orthogonal state variables and related applications to control systems.

The document "Policy invariance under reward transformations: Theory and application to reward shaping" by A. Ng et al., June 1, 1999, discloses considerations on modifications to the reward function of a Markov decision process.

The document "Residual Policy Learning" by T. Silver et al., January 3, 2019, discloses considerations residual policy learning.

### SUMMARY OF THE DISCLOSURE

The present invention is defined by the enclosed claims.

### BRIEF DESCRIPTION OF THE DRAWINGS

FIG. 1 illustrates a block diagram of one non-limiting embodiment of a disclosed robotics control system, as may be used for control of a robotics system, as may involve one or more robots that, for example, may be used in industrial applications involving autonomous control.
FIG. 2 illustrates a block diagram of one non-limiting embodiment of a disclosed machine learning framework, as may be used for efficiently training a disclosed robotics control system.
FIG. 3 illustrates a flow chart of one non-limiting embodiment of a disclosed methodology for training a disclosed robotics control system.
FIGs. 4-7 respectively illustrate further non-limiting details in connection with the disclosed methodology for training a disclosed robotics control system.

### DETAILED DESCRIPTION

The present inventors have recognized that while the basic idea of combining Reinforcement Learning (RL) with conventional control seems very promising, prior to the various innovative concepts disclosed in the present disclosure, a practical implementation in an industrial setting has remained elusive since various nontrivial, technical implementation challenges have not been fully resolved in typical prior art implementations. Some of the challenges solved by disclosed embodiments are listed below:
- appropriately synchronizing the two control techniques so that they do not counteract each other,
- a proper choice and adjustment of the classic control law that is involved,
- a systematic incorporation of simulated experience and real-world experience to train the control strategy in a simulator to, for example, reduce the required sample size.

At least in view of the foregoing considerations, disclosed embodiments realize appropriate improvements in connection with certain known approaches involving RL (see, for example, the two technical papers cited above). It is believed that disclosed embodiments will enable practical and cost-effective industrial deployment of RL integrated with conventional control. The disclosed control approach may be referred throughout this disclosure as Industrial Residual Reinforcement Learning (IRRL).

The present inventors propose various innovative technical features to substantially improve at least certain known approaches involving RL. The following embodiments underlie IRRL:

In a conventional Residual RL technique, a hand-designed controller may involve a rigid control strategy, and, consequently, may not be able to easily adapt to a dynamically changing environment, which, as would be appreciated by one skilled in the art, is a substantial drawback to effectively operate in such an environment. For example, in an object insertion application that may involve randomly positioned objects, the conventional controller may be a position controller. The residual RL control part, may then augment the controller for overall performance improvement. If the position controller, for example, performs a given insertion too fast (e.g., the insertion velocity is too high), the residual RL part may not be able to timely assert any meaningful influence. For example, may not be able to dynamically change the position controller. Instead, in a practical application, the residual control part should be able to appropriately influence (e.g., beneficially oppose) the control signal generated by the conventional controller. For example, if the velocity developed by the position controller is too high, then the residual RL part should be able to influence the control signal generated by the conventional controller to reduce such high velocity. To solve this fundamental problem, the present inventors propose an adaptive interaction between the respective control signals generated by the classic controller and the RL. In principle, on the one hand, the initial conventional controller should be a guiding part and not an opponent to the RL part, and, on the other hand, the RL part should be able to appropriately adapt the conventional controller.

The disclosed adaptive interaction may be as outlined below. First, the respective control signals from the two control strategies (i.e., the conventional control and the RL control) may be compared in terms of their orthogonality, such as by computing their inner product. Signal contributions toward a same projected control "direction" may be punished in a reward function. This avoids that the two control parts "fight" each other. At the same time, a disclosed algorithm can monitor whether the residual RL part has components that try to fight the conventional controller, which may be an indication of inadequacies of the conventional controller for performing a given control task. This indication may then be used to modify the conventional control law, which can either be implemented automatically or through manual adjustments.

Second, instead of constant weighting, as commonly done in a conventional residual RL control strategy, the present inventors innovatively propose adjustable weights. Without limitation, the weight adjustment may be controlled by respective contributions of the control signals towards fulfilling the reward function. The weights become functions of the rewards. This should enable a very efficient learning and smooth execution. The RL control part may be guided depending on how well it has already learned. The rationale behind this is that as soon as the RL control part is at least on par with the initial hand-designed controller, the hand-designed controller is in principle not required anymore and can be partially turned off. However, the initial hand-designed controller will still be able to contribute a control signal whenever the RL control part delivers an inferior performance for a given control task. This blending is gracefully accommodated by the adjustable weights. An analogous, simplified concept would be "bicycle support training wheels", which may be essential during learning, but can provide support even after the learning is finished, at least during challenging situations, e.g., riding too fast when taking a sharp turn.

Known approaches for training Residual RL in simulation generally suffer from hit-or-miss drawbacks, mainly because the simulation is generally setup *a-priori.* Typically, the control policy may be solely trained in a simulation environment and only afterwards the control policy is deployed in a real-world environment. Accordingly, the actual performance based on a control policy solely trained in the simulation environment, would not be self-evident till deployed in the real-world.

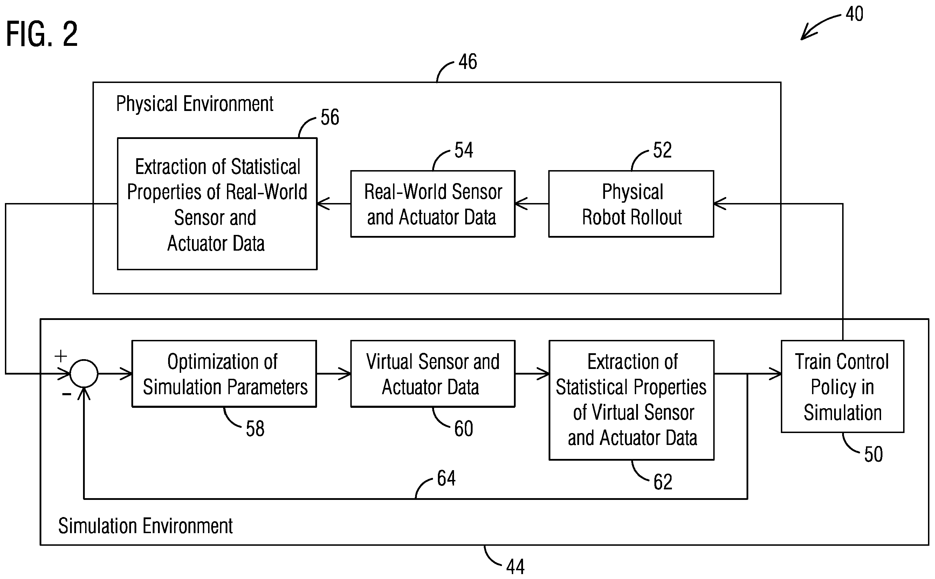

Accordingly, the present inventors further propose an iterative approach, as seen in FIG. 2, for training the IRRL control policy using virtual sensor and actuator data interleaved with real-world sensor and actuator data. Without limitation, a feedback loop may be used to adjust simulated sensor and actuator statistical properties based on real-world sensor and actuator statistical properties, such as may be obtained from a robot roll-out. It can be shown that appropriate understanding of the statistical properties (e.g., random errors, noise, etc.) of sensors and actuators in connection with a given robotic system may be decisive for appropriately fulfilling the performance of a control policy trained in simulation, when such a control policy is deployed in a real-world implementation.

Additionally, in the iterative approach proposed in disclosed embodiments, the simulation environment may be continuously adjusted based on real-world experience. In known approaches, as noted above, training in simulation is generally run until the simulated training is finished and then the simulated training is transferred to a physical robot in a robot roll-out. Instead, disclosed embodiments effectively interleave simulated experience and real-world experience to, for example, ensure that the simulated experience iteratively improves --in a time-efficient manner-- quality and sufficiently converges towards the real-world experience. For example, a friction coefficient used in the simulation may be adjusted based on real-world measurements rendering virtual experiments more useful because the virtual experiments would become closer to mimicking the physics involved in a real-world task being performed by the robot, such as automated object insertions by the robot.

It is noted that in a practical application, simulation adjustments need not necessarily be configured for making a given simulation more realistic, but rather may be configured for achieving accelerated (time-efficient) learning. Accordingly, the physical parameters involved in a given simulation do not necessarily have to precisely converge towards the real-world parameters so long as the learning objectives may be achieved in a time-efficient manner.

The disclosed approach is an appropriately balanced way to rapidly close a simulation-to-reality gap in RL. Moreover, the disclosed approach can allow for making educated improvements to physical effects in the simulation and to quantify them in terms of their relevance for the control policy performance/improvement. For example, "How relevant is it to simulate in a given application electromagnetic forces that can develop between two objects?". The point being that one would not want to allocate valuable simulation resources in connection with non-relevant parameters.

It will be appreciated that bringing simulation and real-world closer together may allow to appropriately tailor the sensor modalities involved in a given application. Without limitation, the disclosed approach can make evaluations about the physical environment. For example, evaluations about how accurate and/or sensitive a given sensor and/or actuator needs to be for appropriately fulfilling a desired control policy objective; or, for example, whether additional sensors and/or actuators need to be added (or whether different sensor modalities and/or actuator modalities need to be used). Without limitation, for example, the disclosed approach could additionally recommend respective locations of where to install such additional sensors and/or actuators.

In the following detailed description, various specific details are set forth in order to provide a thorough understanding of such embodiments. However, those skilled in the art will understand that aspects of the present invention are not limited to the disclosed embodiments, and that aspects of the present invention may be practiced in a variety of alternative embodiments. In other instances, methods, procedures, and components, which would be well-understood by one skilled in the art have not been described in detail to avoid unnecessary and burdensome explanation.

Furthermore, various operations may be described as multiple discrete steps performed in a manner that is helpful for understanding embodiments of the present invention. However, the order of description should not be construed as to imply that these operations need be performed in the order they are presented, nor that they are even order dependent, unless otherwise indicated. Moreover, repeated usage of the phrase "in one embodiment" does not necessarily refer to the same embodiment, although it may. It is noted that disclosed embodiments need not be construed as mutually exclusive embodiments, since aspects of such disclosed embodiments may be appropriately combined by one skilled in the art depending on the needs of a given application.

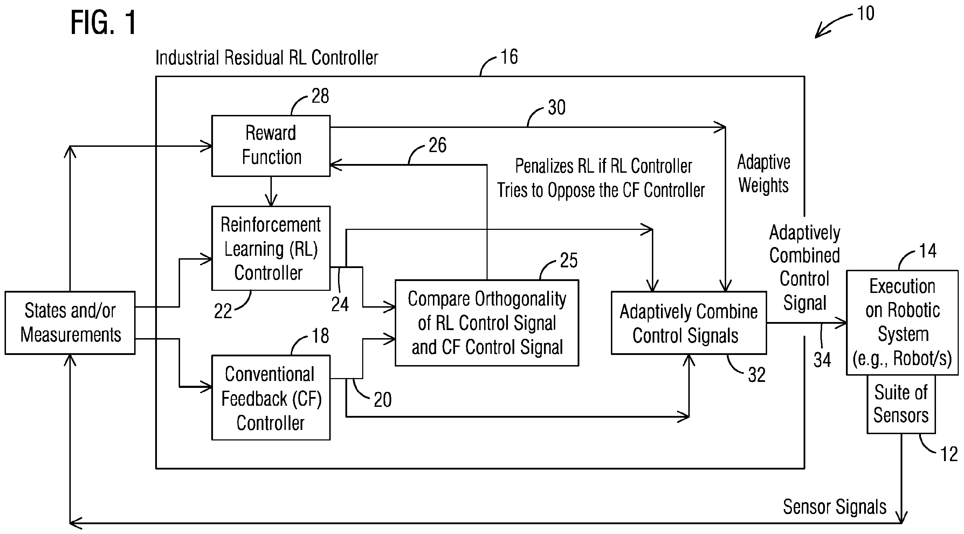

FIG. 1 illustrates a block diagram of one embodiment of a claimed robotics control system 10. A suite of sensors 12 is operatively coupled to a robotic system 14 (e.g., robot/s) controlled by robotics control system 10. A controller 16 is responsive to signals from the suite of sensors 12.

Controller 16 includes a conventional feedback controller 18 configured to generate a conventional feedback control signal 20, and a reinforcement learning controller 22 configured to generate a reinforcement learning control signal 24.

A comparator 25 is configured to compare orthogonality of conventional feedback control signal 20 and reinforcement learning control signal 24. Comparator 25 is configured to supply a signal 26 indicative of orthogonality relations between conventional feedback control signal 20 and the reinforcement learning control signal 24.

Reinforcement learning controller 22 includes a reward function 28 responsive to the signal 26 indicative of the orthogonality relations between conventional feedback control signal 20 and reinforcement learning control signal 24. In one non-limiting embodiment, the orthogonality relations between conventional feedback control signal 20 and reinforcement learning control signal 24 may be determined based on an inner product of conventional feedback control signal 20 and reinforcement learning control signal 24.

In one embodiment, orthogonality relations indicative of interdependency of conventional feedback controller signal 20 and reinforcement learning controller signal 24 are penalized by reward function 28 so that control conflicts between conventional feedback controller 18 and reinforcement learning controller 22 are avoided.

According to the claimed embodiment, reward function 28 of reinforcement learning controller is configured to generate a stream of adaptive weights 30 based on respective contributions of conventional feedback control signal 20 and of reinforcement learning control signal 24 towards fulfilling reward function 28.

According to the claimed embodiment, a signal combiner 32 is configured to adaptively combine conventional feedback control signal 20 and reinforcement learning control signal 24 based on the stream of adaptive weights 30 generated by reward function 28. Signal combiner 32 is configured to supply an adaptively combined control signal 34 of conventional feedback control signal 20 and reinforcement learning control signal 24. The adaptively combined control signal 34 is configured to control robot 14, as the robot performs a sequence of tasks.

Controller 16 is configured to perform a blended control policy for conventional feedback controller 18 and reinforcement learning controller 22 to control robot 14 as the robot performs the sequence of tasks. Without limitation, the blended control policy may include robotic control modes, such as including trajectory control and interactive control of robot 14. By way of example, the interactive control of the robot may include interactions, such as may involve frictional, contact and impact interactions, that, for example, may be experienced by joints (e.g., grippers) of the robot while performing a respective task of the sequence of tasks.

FIG. 2 illustrates a block diagram of one non-limiting embodiment of a flow of acts that may be part of a disclosed machine learning framework 40, as implemented for training disclosed robotics control system 10 (FIG. 1). In one embodiment, the blended control policy for conventional feedback controller 18 and reinforcement learning controller 22 is learned in machine learning framework 40, where virtual sensor and actuator data 60 acquired in a simulation environment 44, and real-world sensor and actuator data 54 acquired in a physical environment 46 may be iteratively interleaved with one another (as elaborated in greater detail below) to efficiently and reliably learn the blended control policy for conventional feedback controller 18 and reinforcement learning controller 22 in a reduced cycle time compared to prior art approaches.

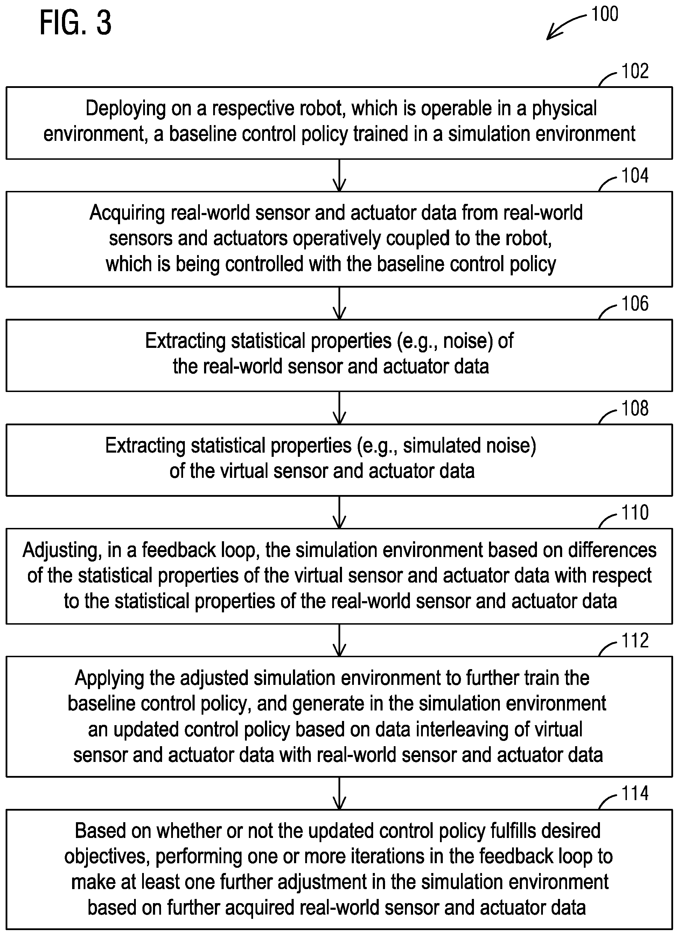

FIG. 3 illustrates a flow chart 100 of one non-limiting embodiment of a disclosed methodology for training disclosed robotics control system 10 (FIG. 1). Block 102 allows deploying --on a respective robot 14 (FIG. 1), such as may be operable in physical environment 46 (FIG. 2) during a physical robot rollout (block 52, (FIG. 2))-- a baseline control policy for robotics control system 10. The baseline control policy is trained (block 50, (FIG. 2)) in simulation environment 44.

Block 104 allows acquiring real-world sensor and actuator data (block 54, (FIG. 2) from real-world sensors and actuators operatively coupled to the respective robot, which is being controlled in physical environment 46 with the baseline control policy trained in simulation environment 44.

Block 106 allows extracting statistical properties of the acquired real-world sensor and actuator data. See also block 56 in FIG. 2. One non-limiting example may be noise, such as may be indicative of a random error of a measured physical parameter.

Block 108 allows extracting statistical properties of the virtual sensor and actuator data in the simulation environment. See also block 62 in FIG. 2. One non-limiting example may be simulated noise, such as may be indicative of a random error of a simulated physical parameter.

Block 110 allows adjusting --e.g., in a feedback loop 64 (FIG. 2) simulation environment 44-- based on differences of the statistical properties of the virtual sensor and actuator data with respect to the statistical properties of the real-world sensor and actuator data.

Block 112 allows applying the adjusted simulation environment to further train the baseline control policy. This would be a first iteration that may be performed in block 50 in FIG 2. This allows generating in simulation environment 44 an updated control policy based on data interleaving of virtual sensor and actuator data 60 with real-world sensor and actuator data 54.

As indicated in block 114, based on whether or not the updated control policy fulfills desired objectives, further iterations may be performed in feedback loop 64 (FIG. 2) to make further adjustments in simulation environment 44, based on further real-world sensor and actuator data 54 further acquired in physical environment 46.

The description below will proceed to describe further non-limiting aspects that may be performed in connection with the disclosed methodology for training disclosed robotics control system 10.

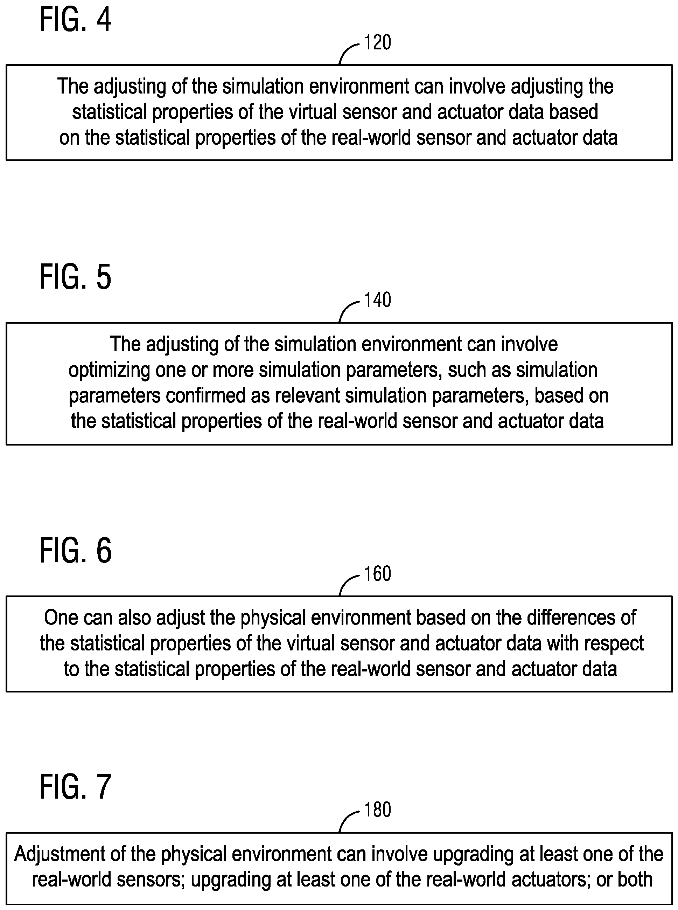

As illustrated in block 120 in FIG. 4, in one non-limiting embodiment, the adjusting of simulation environment 44 (FIG.2) can involve adjusting the statistical properties of the virtual sensor and actuator data based on the statistical properties of the real-world sensor and actuator data.

As illustrated in block 140 in FIG. 5, in one non-limiting embodiment, the adjusting of simulation environment 44 (FIG. 2) can involve optimizing one or more simulation parameters, such as simulation parameters that may be confirmed as relevant simulation parameters, based on the statistical properties of the real-world sensor and actuator data. See also block 58 in FIG. 2.

As illustrated in block 160 in FIG. 6, in one non-limiting embodiment, one may adjust physical environment 46 (FIG. 2), based on the differences of the statistical properties of the virtual sensor and actuator data with respect to the statistical properties of the real-world sensor and actuator data. That is, in some situations the simulation may be adequate, but, for example, the real-world sensors and/or actuators used may be excessively noisy or otherwise inadequate to appropriately fulfill a desired control policy, such as inadequate resolution, not enough accuracy, etc.

For example, this may allow to appropriately tailor the real-world sensor and/or actuator modalities involved in a given application. Without limitation, the disclosed approach can make evaluations about how accurate and/or sensitive a given sensor and/or a given actuator needs to be for appropriately fulfilling a desired control policy objective; or, for example, whether additional sensors and/or additional sensors need to be added (or whether different sensor modalities and/or different actuator modalities need to be used). Without limitation, for example, the disclosed approach could additionally recommend respective locations of where to install such additional sensors and/or actuators.

As illustrated in block 180 in FIG. 7, in one non-limiting embodiment, adjustment of the physical environment can involve upgrading at least one of the real-world sensors; upgrading at least one of the real-world actuators; or both.

In operation, disclosed embodiments allow cost-effective and reliable deployment of deep learning algorithms, such as involving deep learning RL techniques for autonomous industrial automation that may involve robotics control. Without limitation, disclosed embodiments are effective for carrying out continuous, automated robotics control, such as may involve a blended control policy that may include trajectory control and interactive control of a given robot. By way of example, the interactive control of the robot may include relatively difficult to model interactions, such as may involve frictional, contact and impact interactions, that, for example, may be experienced by joints (e.g., grippers) of the robot while performing a respective task of the sequence of tasks.

Disclosed embodiments are believed to be conducive to widespread and flexible applicability of machine learned networks for industrial automation and control that may involve automated robotics control. For example, the efficacy of disclosed embodiments may be based on an adaptive interaction between the respective control signals generated by a classic controller and an RL controller. Additionally, disclosed embodiments can make use of a machine learned framework that effectively interleaves simulated experience and real-world experience to ensure that the simulated experience iteratively improves in quality and converges towards the real-world experience. Lastly, a systematic interleaving of simulated experience and real-world experience to train a control policy in a simulator is effective to substantially reduce the required sample size compared to prior art training approaches.

While embodiments of the present disclosure have been disclosed in exemplary forms, it will be apparent to those skilled in the art that many modifications, additions, and deletions can be made therein without departing from the scope of the invention as set forth in the following claims.

## Claims

1. A robotics control system (10) comprising:
a suite of sensors (12) operatively coupled to a robot controlled by the robotics control system (16); and
a controller (16) responsive to signals from the suite of sensors (12), the controller (16) comprising:
a control policy, trained according to a method according to any one of claims 7 - 15 ; a conventional feedback controller (18) configured to generate a first control signal (20) based on a feedback control technique involving an explicit definition of the body equations of motion that are involved for controlling a trajectory of the robot;
a reinforcement learning controller (22) configured to generate a second control signal (24) based on reinforcement learning;
a comparator (25) configured to compare orthogonality of the first control signal and the second control signal, wherein the comparator (25) is configured to supply a signal (26) indicative of orthogonality relations between the first control signal and the second control signal;
wherein, to avoid control conflicts between the conventional feedback controller (18) and the reinforcement learning controller (22), the reinforcement learning controller (22) includes a reward function (28) which is configured to penalize orthogonality relations indicative of interdependency of the first control signal and the second control signal in response to the signal indicative of the orthogonality relations between the first control signal and the second control signal, and
wherein the reward function (28) of the reinforcement learning controller (22) is configured to perform a weight adjustment by generating a stream of adaptive weights (30) based on respective contributions of the first control signal and of the second control signal, the weights of the stream of weights being functions of rewards of the reward function (28);
the robotics control system (10) further comprising
a signal combiner (32) configured to adaptively combine the first control signal and the second control signal based on the stream of adaptive weights generated by the reward function (28) of the reinforcement learning controller (22),
wherein the signal combiner (32) is configured to supply an adaptively combined control signal (34) of the first control signal and the second control signal, the controller further configured to perform the trained control policy for the conventional feedback controller and the reinforcement learning controller, and further configured to control the robot based on the adaptively combined control signal as the robot performs a sequence of tasks.

2. The robotics control system of claim 1, wherein
the orthogonality relations between the first control signal and the second control signal are determined based on an inner product of the first signal and the second control signal.

3. The robotics control system of claim 1, wherein the controller (16) is configured to perform a blended control policy for the conventional feedback controller and the reinforcement learning controller to control the robot as the robot performs the sequence of tasks.

4. The robotics control system of claim 3, wherein the blended control policy comprises robotic control modes including trajectory control

5. The robotics control system of claim 3, wherein
the control policy comprises robotic control modes including control of the robot comprising frictional, contact and impact interactions by joints of the robot while performing a respective task of the sequence of tasks.

6. The robotics control system of claim 3, wherein the blended control policy for the conventional feedback controller and the reinforcement learning controller being learned in a machine learning framework, wherein virtual sensor and actuator data acquired in a simulation environment, and sensor and actuator data acquired in a physical environment are iteratively interleaved with one another to learn the control policy for the conventional feedback controller and the reinforcement learning controller in a reduced cycle time.

7. A method for training a robotics control system (10) according to any one of claims 1 to 6, the robotics control system (10) comprising a conventional feedback controller (18) and a reinforcement learning controller (22), the method comprising:
deploying (102) on a robotics control system (1), comprising a robot (14), which is operable in a physical environment (46), a baseline control policy for the robotics control system, the baseline control policy trained in a simulation environment (44);
acquiring (104) real-world sensor and actuator data (54) from real-world sensors and actuators operatively coupled to the robot, which is being controlled in the physical environment with the baseline control policy;
extracting (106) statistical properties of the acquired real-world sensor and actuator data;
extracting (108) statistical properties of virtual sensor and actuator data in the simulation environment;
adjusting (110), in a feedback loop, the simulation environment based on differences of the statistical properties of the virtual sensor and actuator data with respect to the statistical properties of the real-world sensor and actuator data;
applying (112) the adjusted simulation environment to further train the baseline control policy, and generate in the simulation environment an updated control policy based on data interleaving of virtual sensor and actuator data with real-world sensor and actuator data;
based on whether or not the updated control policy fulfills desired objectives, performing (114) further iterations in the feedback loop to make further adjustments in the simulation environment based on further real-world sensor and actuator data acquired in the physical environment.

8. The method for training the robotics control system of claim 7, wherein the data interleaving is configured to reduce a training sample size to fulfill a blended control policy for the conventional feedback controller and the reinforcement learning controller.

9. The method for training the robotics control system of claim 7, wherein
the adjusting of the simulation environment comprises adjusting (120) the statistical properties of the virtual sensor and actuator data based on the statistical properties of the real-world sensor and actuator data.

10. The method for training the robotics control system of claim 7, wherein
the adjusting of the simulation environment comprises optimizing (140) one or more simulation parameters based on the statistical properties of the real-world sensor and actuator data.

11. The method for training the robotics control system of claim 7, wherein,
based on the differences of the statistical properties of the virtual sensor and actuator data with respect to the statistical properties of the real-world sensor and actuator data, confirming relevancy of simulation parameters towards fulfilment of the control policy for the robotics control system in the simulation environment.

12. The method for training the robotics control system of claim 7, wherein,
based on the differences of the statistical properties of the virtual sensor and actuator data with respect to the statistical properties of the real-world sensor and actuator data, confirming relevancy measurements by the sensors and actuators operatively coupled to the respective robot in the physical environment towards fulfilment of the control policy for the robotics control system in the simulation environment.

13. The method for training the robotics control system of claim 7, wherein,
based on the differences of the statistical properties of the virtual sensor and actuator data with respect to the statistical properties of the real-world sensor and actuator data, adjusting (160) the physical environment.

14. The method for training the robotics control system of claim 13, wherein
the adjusting of the physical environment comprises upgrading at least one of the real-world sensors, upgrading at least one of the real-world actuators, or both.

15. The method for training the robotics control system of claim 13, wherein
the adjusting of the physical environment comprises adding at least one further sensor, adding at least one further actuator, or both.

## Patentansprüche

1. Robotersteuerungssystem (10), das Folgendes umfasst:
eine Reihe von Sensoren (12), die betreibbar mit einem durch das Robotersteuerungssystem (16) gesteuerten Roboter gekoppelt sind; und
eine Steuerung (16), die auf Signale von der Reihe von Sensoren (12) reagiert, wobei die Steuerung (16) Folgendes umfasst:
eine Steuerungsrichtlinie, die nach einem Verfahren nach einem der Ansprüche 7 bis 15 trainiert wird;
eine herkömmliche Rückkopplungssteuerung (18), die dazu ausgelegt ist, ein erstes Steuersignal (20) basierend auf einer Rückkopplungssteuerungstechnik zu erzeugen, die eine explizite Definition der Bewegungsgleichungen des Körpers beinhaltet, die zum Steuern einer Bewegungsbahn des Roboters beteiligt sind;
eine Steuerung (22) für verstärkendes Lernen, die dazu ausgelegt ist, ein zweites Steuersignal (24) basierend auf verstärkendem Lernen zu erzeugen;
einen Komparator (25), der dazu ausgelegt ist, die Orthogonalität des ersten Steuersignals und des zweiten Steuersignals zu vergleichen, wobei der Komparator (25) dazu ausgelegt ist, ein Signal (26) zu liefern, das kennzeichnend für Orthogonalitätsbeziehungen zwischen dem ersten Steuersignal und dem zweiten Steuersignal ist;
wobei, um Steuerungskonflikte zwischen der konventionellen Rückkopplungssteuerung (18) und der Steuerung (22) für verstärkendes Lernen zu vermeiden, die Steuerung (22) für verstärkendes Lernen eine Belohnungsfunktion (28) beinhaltet, die dazu ausgelegt ist, Orthogonalitätsbeziehungen, die kennzeichnend für die Interdependenz des ersten Steuersignals und des zweiten Steuersignals sind, als Reaktion auf das Signal, das kennzeichnend für die Orthogonalitätsbeziehungen zwischen dem ersten Steuersignal und dem zweiten Steuersignal ist, zu bestrafen, und
wobei die Belohnungsfunktion (28) der Steuerung (22) für verstärkendes Lernen dazu ausgelegt ist, eine Gewichtsanpassung durch Erzeugen eines Stroms adaptiver Gewichte (30) basierend auf jeweiligen Beiträgen des ersten Steuersignals und des zweiten Steuersignals durchzuführen, wobei die Gewichte des Stroms von Gewichten Funktionen von Belohnungen der Belohnungsfunktion (28) sind;
das Robotersteuerungssystem (10) ferner einen Signalkombinierer (32) umfasst, der dazu ausgelegt ist, das erste Steuersignal und das zweite Steuersignal basierend auf dem Strom von adaptiven Gewichten, die durch die Belohnungsfunktion (28) der Steuerung (22) für verstärkendes Lernen erzeugt werden, adaptiv zu kombinieren,
wobei der Signalkombinierer (32) dazu ausgelegt ist, ein adaptiv kombiniertes Steuersignal (34) aus dem ersten Steuersignal und dem zweiten Steuersignal zu liefern, wobei die Steuerung ferner dazu ausgelegt ist, die trainierte Steuerungsrichtlinie für die herkömmliche Rückkopplungssteuerung und die Steuerung für verstärkendes Lernen durchzuführen, und ferner dazu ausgelegt ist, den Roboter basierend auf dem adaptiv kombinierten Steuersignal zu steuern, wenn der Roboter eine Folge von Aufgaben ausführt.

2. Robotersteuerungssystem nach Anspruch 1, wobei
die Orthogonalitätsbeziehungen zwischen dem ersten Steuersignal und dem zweiten Steuersignal basierend auf einem inneren Produkt aus dem ersten Signal und dem zweiten Steuersignal bestimmt werden.

3. Robotersteuerungssystem nach Anspruch 1, wobei
die Steuerung (16) dazu ausgelegt ist, eine gemischte Steuerungsrichtlinie für die herkömmliche Rückkopplungssteuerung und die Steuerung für verstärkendes Lernen durchzuführen, um den Roboter zu steuern, wenn der Roboter die Folge von Aufgaben ausführt.

4. Robotersteuerungssystem nach Anspruch 3, wobei
die gemischte Steuerungsrichtlinie Robotersteuerungsmodi umfasst, die eine Bewegungsbahnsteuerung beinhalten.

5. Robotersteuerungssystem nach Anspruch 3, wobei
die Steuerungsrichtlinie Robotersteuerungsmodi umfasst, die eine Steuerung des Roboters beinhalten, die Reibungs-, Kontakt- und Stoßinteraktionen durch Gelenke des Roboters während des Durchführens einer jeweilige Aufgabe der Folge von Aufgaben umfasst.

6. Robotersteuerungssystem nach Anspruch 3, wobei
wobei die gemischte Steuerungsrichtlinie für die konventionelle Rückkopplungssteuerung und die Steuerung für verstärkendes Lernen in einem Framework für maschinelles Lernen gelernt wird, wobei virtuelle Sensor- und Stellglieddaten, die in einer Simulationsumgebung erfasst werden, und Sensor-und Stellglieddaten, die in einer physischen Umgebung erfasst werden, iterativ miteinander verschachtelt werden, um die Steuerungsrichtlinie für die konventionelle Rückkopplungssteuerung und die Steuerung für verstärkendes Lernen in einer reduzierten Zykluszeit zu lernen.

7. Verfahren zum Trainieren eines Robotersteuerungssystems (10) nach einem der Ansprüche 1 bis 6, wobei das Robotersteuerungssystem (10) eine herkömmliche Rückkopplungssteuerung (18) und eine Steuerung (22) für verstärkendes Lernen umfasst, wobei das Verfahren umfasst:
Einsetzen (102) einer grundlegenden Steuerungsrichtlinie für das Robotersteuerungssystem auf einem Robotersteuerungssystem (1), das einen Roboter (14) umfasst, der in einer physischen Umgebung (46) betreibbar ist, wobei die grundlegende Steuerungsrichtlinie in einer Simulationsumgebung (44) trainiert wird;
Erfassen (104) von realen Sensor- und Stellglieddaten (54) von realen Sensoren und Stellgliedern, die betreibbar mit dem Roboter gekoppelt sind, der in der physischen Umgebung durch die grundlegende Steuerungsrichtlinie gesteuert wird;
Extrahieren (106) statistischer Eigenschaften der erfassten realen Sensor-und Stellglieddaten;
Extrahieren (108) statistischer Eigenschaften von virtuellen Sensor- und Stellglieddaten in der Simulationsumgebung;
Anpassen (110) der Simulationsumgebung in einer Rückkopplungsschleife basierend auf den Unterschieden der statistischen Eigenschaften der virtuellen Sensor- und Stellglieddaten in Bezug auf die statistischen Eigenschaften der realen Sensor- und Stellglieddaten;
Anwenden (112) der angepassten Simulationsumgebung, um die grundlegende Steuerungsrichtlinie weiter zu trainieren und in der Simulationsumgebung eine aktualisierte Steuerungsrichtlinie basierend auf dem Verschachteln von virtuellen Sensor- und Stellglieddaten mit realen Sensor- und Stellglieddaten zu erzeugen;
basierend darauf, ob die aktualisierte Steuerungsrichtlinie die gewünschten Ziele erfüllt oder nicht, Durchführen (114) weiterer Iterationen in der Rückkopplungsschleife, um weitere Anpassungen in der Simulationsumgebung basierend auf weiteren realen Sensor- und Stellglieddaten, die in der physischen Umgebung erfasst wurden, vorzunehmen.

8. Verfahren zum Trainieren des Robotersteuerungssystems nach Anspruch 7, wobei
das Verschachteln der Daten dazu ausgelegt ist, eine Trainingsstichprobengröße zu reduzieren, um eine gemischte Steuerungsrichtlinie für die konventionelle Rückkopplungssteuerung und die Steuerung für verstärkendes Lernen zu erfüllen.

9. Verfahren zum Trainieren des Robotersteuerungssystems nach Anspruch 7, wobei
das Anpassen der Simulationsumgebung das Anpassen (120) der statistischen Eigenschaften der virtuellen Sensor- und Stellglieddaten basierend auf den statistischen Eigenschaften der realen Sensor- und Stellglieddaten umfasst.

10. Verfahren zum Trainieren des Robotersteuerungssystems nach Anspruch 7, wobei
das Anpassen der Simulationsumgebung das Optimieren (140) eines oder mehrerer Simulationsparameter umfasst, basierend auf den statistischen Eigenschaften der realen Sensor- und Stellglieddaten.

11. Verfahren zum Trainieren des Robotersteuerungssystems nach Anspruch 7, wobei,
basierend auf den Unterschieden der statistischen Eigenschaften der virtuellen Sensor- und Stellglieddaten in Bezug auf die statistischen Eigenschaften der realen Sensor- und Stellglieddaten, Bestätigen der Relevanz von Simulationsparametern für die Erfüllung der Steuerungsrichtlinie für das Robotersteuerungssystem in der Simulationsumgebung.

12. Verfahren zum Trainieren des Robotersteuerungssystems nach Anspruch 7, wobei,
basierend auf den Unterschieden der statistischen Eigenschaften der virtuellen Sensor- und Stellglieddaten in Bezug auf die statistischen Eigenschaften der realen Sensor- und Stellglieddaten, Bestätigen von Relevanzmessungen durch die betreibbar mit dem jeweiligen Roboter in der physischen Umgebung gekoppelten Sensoren und Stellglieder zur Erfüllung der Steuerungsrichtlinie für das Robotersteuerungssystem in der Simulationsumgebung.

13. Verfahren zum Trainieren des Robotersteuerungssystems nach Anspruch 7, wobei,
basierend auf den Unterschieden der statistischen Eigenschaften der virtuellen Sensor- und Stellglieddaten in Bezug auf die statistischen Eigenschaften der realen Sensor- und Stellglieddaten, Anpassen (160) der physischen Umgebung.

14. Verfahren zum Trainieren des Robotersteuerungssystems nach Anspruch 13, wobei
das Anpassen der physischen Umgebung das Aufrüsten mindestens eines der realen Sensoren, das Aufrüsten mindestens eines der realen Stellglieder oder beides umfasst.

15. Verfahren zum Trainieren des Robotersteuerungssystems nach Anspruch 13, wobei
das Anpassen der physischen Umgebung das Hinzufügen mindestens eines weiteren Sensors, das Hinzufügen mindestens eines weiteren Stellglieds oder beides umfasst.

## Revendications

1. Système de commande robotique (10) comprenant :
une suite de capteurs (12) fonctionnellement couplés à un robot commandé par le système de commande robotique (16) ; et
un contrôleur (16) sensible à des signaux provenant de la suite de capteurs (12), le contrôleur (16) comprenant :
une politique de commande, entraînée conformément à un procédé selon l'une quelconque des revendications 7 - 15 ;
un contrôleur de rétroaction classique (18) configuré pour générer un premier signal de commande (20) sur la base d'une technique de commande par rétroaction impliquant une définition explicite des équations de mouvement des corps, qui interviennent pour configurer une trajectoire du robot ;
un contrôleur d'apprentissage par renforcement (22) configuré pour générer un deuxième signal de commande (24) sur la base d'un apprentissage par renforcement ;
un comparateur (25) configuré pour comparer l'orthogonalité du premier signal de commande et du deuxième signal de commande, le comparateur (25) étant configuré pour fournir un signal (26) représentatif de relations d'orthogonalité entre le premier signal de commande et le deuxième signal de commande ;
dans lequel, pour éviter des conflits de commande entre le contrôleur de rétroaction classique (18) et le contrôleur d'apprentissage par renforcement (22), le contrôleur d'apprentissage par renforcement (22) comprend une fonction de récompense (28) qui est configurée pour pénaliser des relations d'orthogonalité représentatives de l'interdépendance entre le premier signal de commande et le deuxième signal de commande en réponse au signal représentatif des relations d'orthogonalité entre le premier signal de commande et le deuxième signal de commande, et
dans lequel la fonction de récompense (28) du contrôleur d'apprentissage par renforcement (22) est configurée pour réaliser un ajustement de poids en générant un flux de poids adaptatifs (30) sur la base de contributions respectives du premier signal de commande et du deuxième signal de commande, les poids du flux de poids étant des fonctions de récompenses de la fonction de récompense (28) ;
le système de commande robotique (10) comprenant outre un combineur de signaux (32) configuré pour combiner de manière adaptative le premier signal de commande et le deuxième signal de commande sur la base du flux de poids adaptatifs générés par la fonction de récompense (28) du contrôleur d'apprentissage par renforcement (22),
dans lequel le combineur de signaux (32) est configuré pour délivrer un signal de commande combiné de manière adaptative (34) du premier signal de commande et du deuxième signal de commande, le contrôleur étant en outre configuré pour mettre en oeuvre la politique de commande entraînée pour le contrôleur de rétroaction classique et le contrôleur d'apprentissage par renforcement, et étant en outre configuré pour commander le robot sur la base du signal de commande combiné de manière adaptative à mesure que le robot réalise une séquence de tâches.

2. Système de commande robotique selon la revendication 1, dans lequel
les relations d'orthogonalité entre le premier signal de commande et le deuxième signal de commande sont déterminées sur la base d'un produit intérieur du premier signal et du deuxième signal de commande.

3. Système de commande robotique selon la revendication 1, dans lequel
le contrôleur (16) est configuré pour mettre en oeuvre une politique de commande mixte destinée au contrôleur de rétroaction classique et au contrôleur d'apprentissage par renforcement afin de commander le robot au fur et à mesure que celui-ci réalise la séquence de tâches.

4. Système de commande robotique selon la revendication 3, dans lequel
la politique de commande mixte comprend des modes de commande robotiques comprenant la commande de trajectoire.

5. Système de commande robotique selon la revendication 3, dans lequel
la politique de commande comprend des modes de commande robotiques comprenant une commande du robot qui comporte des interactions de frottement, de contact et de choc par des articulations du robot tout en exécutant une tâche respective de la séquence de tâches.

6. Système de commande robotique selon la revendication 3, dans lequel
la politique de commande mixte destinée au contrôleur de rétroaction classique et au contrôleur d'apprentissage par renforcement est apprise dans un cadre d'apprentissage automatique, dans lequel les données de capteurs et d'actionneurs virtuels acquises dans un environnement de simulation, et les données de capteurs et d'actionneurs acquises dans un environnement physique sont entrelacées les unes avec les autres de manière itérative pour apprendre la politique de commande destinée au contrôleur de rétroaction classique et au contrôleur d'apprentissage par renforcement en un temps de cycle réduit.

7. Procédé d'entraînement d'un système de commande robotique (10) selon l'une quelconque des revendications 1 à 6, le système de commande robotique (10) comprenant un contrôleur de rétroaction classique (18) et un contrôleur d'apprentissage par renforcement (22), le procédé comprenant :
le déploiement (102) sur un système de commande robotique (1), comprenant un robot (14) qui est utilisable dans un environnement physique (46), d'une politique de commande de base destinée au système de commande robotique, la politique de commande de base ayant été entraînée dans un environnement de simulation (44) ;
l'acquisition (104) de données de capteurs et d'actionneurs du monde réel (54) en provenance de capteurs et d'actionneurs du monde réel fonctionnellement couplés au robot, qui est commandé dans l'environnement physique à l'aide de la politique de commande robotique de base ;
l'extraction (106) de propriétés statistiques de données de capteurs et d'actionneurs acquises dans le monde réel ;
l'extraction (108) de propriétés statistiques de données de capteurs et d'actionneurs virtuels dans l'environnement de simulation ;
l'ajustement (110), dans une boucle de rétroaction, de l'environnement de simulation sur la base de différences des propriétés statistiques des données de capteurs et d'actionneurs virtuels par rapport aux propriétés statistiques des données de capteurs et d'actionneurs du monde réel ;
l'application (112) de l'environnement de simulation ajusté pour entraîner davantage la politique de commande de base, et générer dans l'environnement de simulation une politique de commande mise à jour sur la base d'un entrelacement de données de capteurs et d'actionneurs virtuels avec des données de capteurs et d'actionneurs du monde réel ;
selon que la politique de commande mise à jour remplit ou non les objectifs souhaités, la réalisation (114) d'itérations supplémentaires dans la boucle de rétroaction pour effectuer des ajustements supplémentaires dans l'environnement de simulation sur la base d'autres données de capteurs et d'actionneurs du monde réel acquises dans l'environnement physique.

8. Procédé d'entraînement du système de commande robotique selon la revendication 7, dans lequel
l'entrelacement de données est configuré pour réduire la taille d'un échantillon d'entraînement afin de satisfaire à une politique de commande mixte destinée au contrôleur de rétroaction classique et au contrôleur d'apprentissage par renforcement.

9. Procédé d'entraînement du système de commande robotique selon la revendication 7, dans lequel
l'ajustement de l'environnement de simulation comprend l'ajustement (120) des propriétés statistiques des données de capteurs et d'actionneurs virtuels sur la base des propriétés statistiques des données de capteurs et d'actionneurs du monde réel.

10. Procédé d'entraînement du système de commande robotique selon la revendication 7, dans lequel
l'ajustement de l'environnement de simulation comprend l'optimisation (140) d'un ou de plusieurs paramètres de simulation sur la base des propriétés statistiques des données de capteurs et d'actionneurs du monde réel.

11. Procédé d'entraînement du système de commande robotique selon la revendication 7, dans lequel,
sur la base des différences des propriétés statistiques des données de capteurs et d'actionneurs virtuels par rapport aux propriétés statistiques des données de capteurs et d'actionneurs du monde réel, une confirmation de la pertinence de paramètres de simulation est effectuée en vue de la mise en oeuvre de la politique de commande destinée au système de commande robotique dans l'environnement de simulation.

12. Procédé d'entraînement du système de commande robotique selon la revendication 7, dans lequel,
sur la base des différences des propriétés statistiques des données de capteurs et d'actionneurs virtuels par rapport aux propriétés statistiques des données de capteurs et d'actionneurs du monde réel, une confirmation de la pertinence des mesures effectuées par les capteurs et les actionneurs fonctionnellement couplés au robot respectif dans l'environnement physique est effectuée en vue de la mise en oeuvre de la politique de commande destinée au système de commande robotique dans l'environnement de simulation.

13. Procédé d'entraînement du système de commande robotique selon la revendication 7, dans lequel,
sur la base des différences des propriétés statistiques des données de capteurs et d'actionneurs virtuels par rapport aux propriétés statistiques des données de capteurs et d'actionneurs du monde réel, un ajustement (160) de l'environnement physique est effectué.

14. Procédé d'entraînement du système de commande robotique selon la revendication 13, dans lequel
l'ajustement de l'environnement physique comprend la mise à niveau d'au moins l'un des capteurs du monde réel, la mise à niveau d'au moins l'un des actionneurs du monde réel, ou les deux.

15. Procédé d'entraînement du système de commande robotique selon la revendication 13, dans lequel
l'ajustement de l'environnement physique comprend l'ajout d'au moins un capteur supplémentaire, l'ajout d'au moins un actionneur supplémentaire, ou les deux.
